# EUROPEAN PATENT SPECIFICATION

(11) **EP 3 495 948 B1**
(45) Date of publication and mention of the grant of the patent: **05.01.2022**
(21) Application number: 17205497.5
(22) Date of filing: 05.12.2017
(51) Int. Cl.: G06F 9/44

(54) **METHOD OF OPERATING AN ELECTRONIC DEVICE, ELECTRONIC DEVICE AND COMPUTER PROGRAM**
VERFAHREN ZUM BETRIEB EINER ELEKTRONISCHEN VORRICHTUNG, ELEKTRONISCHE VORRICHTUNG UND COMPUTERPROGRAMM
PROCÉDÉ DE FONCTIONNEMENT D'UN DISPOSITIF ÉLECTRONIQUE, DISPOSITIF ÉLECTRONIQUE ET PROGRAMME INFORMATIQUE

(43) Date of publication of application: 12.06.2019
(73) Proprietor: Vestel Elektronik Sanayi ve Ticaret A.S., 45030 Manisa (TR)
(72) Inventor: ÖZTEKIN, Güner, 45030 Manisa (TR)
(74) Representative: Martinez, Olivier Gildas

(56) References cited:
- EP-A1- 2 400 450
- US-A1- 2013 219 409

## Description

### Technical Field

The present disclosure relates to a method of operating an electronic device, an electronic device and a computer program.

### Background

Many mobile phones, including in particular "smart phones", are equipped with navigation applications designed to calculate routes to a destination location, display maps showing a current location, provide turn by turn directions, estimate times of arrival, etc.

Navigation applications are typically run in the foreground whilst other applications are run in the background. In this way, notifications indicative of various events can be generated and output by mobile phones whilst the navigation applications are running. Outputting these notifications is not always desirable as it may distract drivers and may cause dangerous behaviours.

EP2400450A1 describes techniques for operating a navigation system to block unwanted advertisements.

US2013/0219409A1 describes techniques for receiving messages including various data from application services and providing notifications including that data to the appropriate computing devices.

### Summary

The invention relates to a method of operating an electronic device, an electronic device and a computer program product as set forth in the claims.

### Brief Description of the Drawings

To assist understanding of the present disclosure and to show how embodiments may be put into effect, reference is made by way of example to the accompanying drawings in which:
Figure 1 shows schematically an example of an electronic device according to an embodiment disclosed therein;
Figure 2 shows schematically an example of a flow diagram of a method according to an embodiment disclosed therein; and
Figures 3 and 4 show schematically an example of an electronic device in operation according to an embodiment disclosed therein.

### Detailed Description

Solutions have been proposed to actively prevent a driver from receiving phone calls whilst a navigation application is running on a mobile phone. For example, a mobile phone has been equipped with a Hall effect switch so that when the mobile phone is placed in a specific mount or support equipped with a magnetic plate and a Global Positioning System unit of the mobile phone detects that the driver is driving above a certain speed, the Hall effect switch switches off a communication unit to prevent the driver from receiving phone calls. Such solution is not satisfying as it increases the complexity of existing mobile phones and requires mobile phones to be placed in specific mounts or supports.

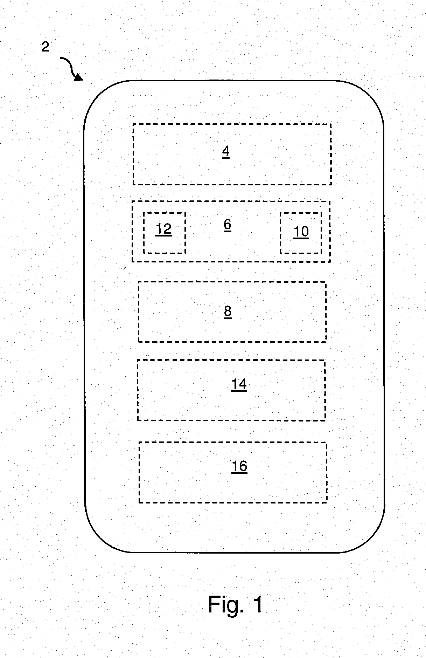

Figure 1 shows schematically an example of an electronic device 2 according to an embodiment. The electronic device 2 may be for example a mobile phone, including for example a smart phone, a tablet computer, a smart watch or other.

The electronic device 2 comprises a communication unit 4 configured to receive and/or transmit data to corresponding electronic devices via a network. For example, the communication unit 4 may be configured to receive and/or transmit Short Message System (SMS) data, a Multimedia Message System (MMS) data, phone call data and/or an Internet Protocol (IP) data.

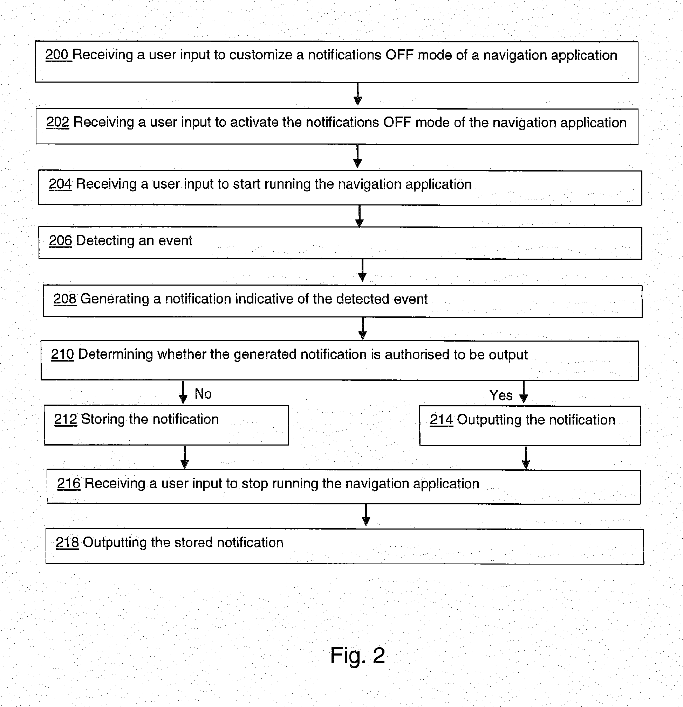

The electronic device 2 comprises a memory unit 6 and processing unit 8. The memory unit 6 stores a computer program which when executed by the processing unit 8 allows the processing unit 8 to perform the method of Figure 2 (described in further detail below).

The memory unit 6 stores a navigation software application 10 designed to calculate routes to a destination location, display maps showing a current location, provide turn by turn directions, estimate times of arrival, etc. The navigation application 10 is also designed to operate in a notifications ON mode and a notifications OFF mode (explained in further detail below).

The memory unit 6 stores applications 12 designed to detect an event and to generate notifications indicative of the detected event. The event may be the reception of a phone call, the reception of a message, the availability of a software update, the publication of a comment on social media, the completion of a download operation, the state of the battery unit or other. The notification may comprise a visual element (e.g. text), a sound element (e.g. ring tone) a haptic element (e.g. vibration) or other.

The applications 12 can be run in the background whilst the navigation application 10 is run in the foreground. In this way, notifications indicative of various events can be generated in the background whilst the navigation application 10 is running in the foreground.

It will be understood that an application running in the foreground may refer to an application that provides a user interface, for example to display information and/or to receive user inputs. To the contrary, a background application does not provide such user interface.

The applications 12 comprise one or more of a social media application, a phone call application, an SMS application, an MMS application, a mail application, a dating application, a system management application or other.

The notifications ON mode permits outputting all notifications generated by the applications 12 in the background when the navigation application 10 is running in the foreground.

The notifications OFF mode prevents outputting at least some notifications generated by at least some of the applications 12 in the background when the navigation application 10 is running in the foreground. The notifications OFF mode authorises or permits outputting other notifications generated by at least some of the applications 12 in the background when the navigation application 10 is running in the foreground.

For example, the notifications OFF mode only permits outputting notifications indicating the reception of a message or the reception of a phone call from a predetermined electronic device or contact.

The notifications prevented or permitted in the notifications OFF mode may be set by default or customised by the user by adjusting the settings of the navigation application. That is, in this example, the setting of which notifications by other applications are prevented or permitted in the notifications OFF mode is carried out as part of the running of the navigation application, and those settings are used to override any related settings that were set in the individual other applications themselves. In other words, in this example, settings made in the navigation application for other applications on the electronic device 2 take priority over the same or corresponding settings that may have been set (manually or by default) in the other applications.

The notifications OFF mode may be activated by default or by the user by adjusting the settings of the navigation application.

The electronic device 2 comprises an output unit 14 configured to output notifications generated by the applications 12. The output unit 14 may comprise one or more of a display, a loudspeaker, a vibration motor or other.

The electronic device 2 comprises a battery unit 16 to supply power to the communication unit 4, the memory unit 6, the processing unit 8 and the output unit 14.

Figure 2 shows a flow diagram of an example of a method performed by the electronic device 2.

In step 200, the processing unit 8 receives a user input to adjust the settings of the navigation application and customise notifications prevented or permitted in the notifications OFF mode. The electronic device 2 then stores the adjusted settings of the navigation application 10.

For example, the user adjusts the settings so that the notifications OFF mode only permits outputting a notification indicating the reception of a SMS message or a phone call from a known contact "Amy" (i.e. "Amy" is saved as a contact in an address book or the like in the electronic device 2) when the navigation application 10 is running.

In step 202, the processing unit 8 receives user input to adjust the settings of the navigation application and activate the notifications OFF mode. The electronic device 2 stores the adjusted settings.

In step 204, the processing unit 8 receives a user input to start running the navigation application 10 in the foreground.

For example, the user opens the navigation application 10 and provides a destination location. The navigation application 10 then calculates a route to the destination location, displays a map showing a current location, provides turn by turn directions to the destination location and estimates a time of arrival.

In step 206, the processing unit 8 detects an event via one of the applications 12 running in the background.

For example, the processing unit 8 detects the reception of an SMS message from a contact "John" via a SMS application. Moreover, the processing unit 8 detects the reception of a phone call from the contact "Amy" via a phone call application.

In step 208, the processing unit 8 generates a notification indicating the event detected via one of the applications 12 running in the background.

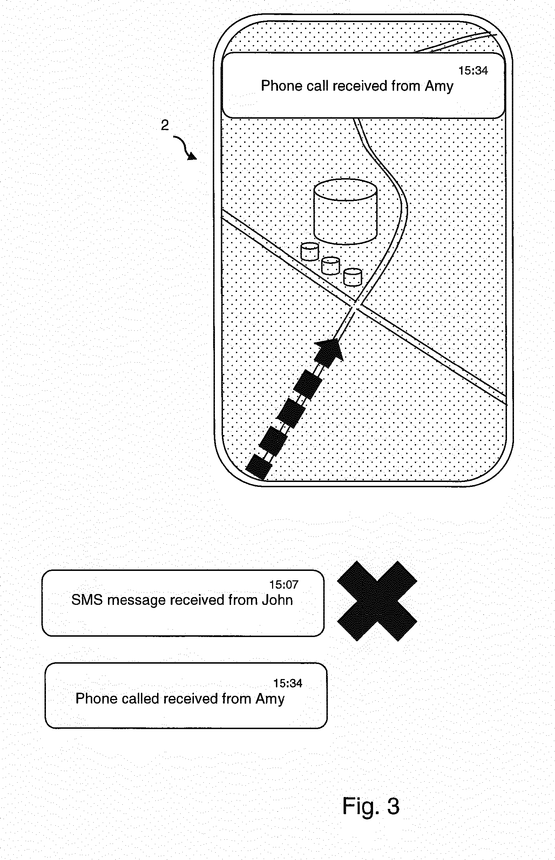

For example, the processing unit 8 generates a notification indicating the reception of an SMS message from "John" via the SMS application. Moreover, the processing unit 8 generates a notification indicating the reception of a message from "Amy" via the phone call application (see Figure 3).

In step 210, the processing unit 8 determines whether the generated notification is permitted to be output. The processing unit 8 checks the settings of the navigation application 10 and checks that the notifications OFF mode is activated. It further determines whether the notifications OFF mode prevents outputting the generated notification. If the notifications OFF mode permits outputting the generated notification, the method goes to step 212. If the notifications OFF mode does not permit the generated notification, the method goes to step 214.

For example, the processing unit 8 determines that the notifications OFF mode prevents outputting the notification indicating the reception of a SMS message from "John". The method goes to step 212.

Moreover, the processing unit 8 determines that that the notifications OFF mode permits outputting the notification indicating the reception of a message from "Amy". The method goes to step 214.

In step 212 (i.e. the generated notification is not permitted to be output), the processing unit 8 stores the generated notification in the memory unit 6. Optionally, the processing unit 8 generates an automatic message and passes the automatic message to the communication unit 4 for transmission.

For example, the processing unit 8 stores the notification indicating that a message has been received from "John", generates an automatic message and passes the automatic message to the communication unit 4 for transmission to "John". The automatic message may indicate that the user of the electronic device 2 is currently driving and cannot read the received SMS message.

In step 214 (i.e. the generated notification is permitted to be output), the processing unit 8 outputs the generated notification on the output unit 14.

For example, the processing unit 8 passes the notification indicating the reception of a phone call from "Am"y to the output unit 14. The output unit 14 may display a text, play back a ring tone, generate a vibration or other.

In step 216, the processing unit 8 receives a user input to stop running the navigation application 10. For example, the processing unit 8 receives a user input to close the displayed map and to exit the navigation application 10.

In step 218, as the navigation application is no longer running in the foreground, the processing unit 8 outputs the notification stored in the memory unit in step 212.

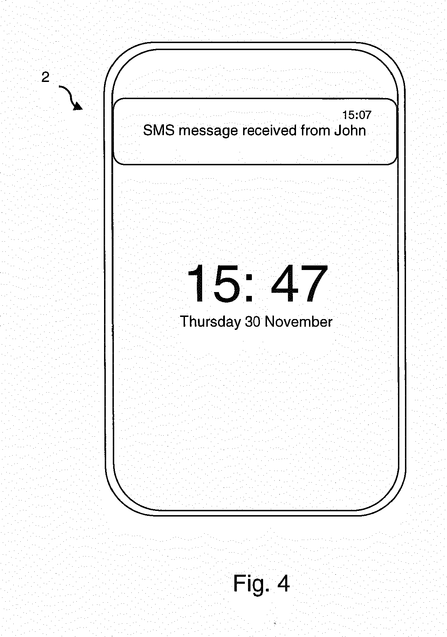

For example, the processing unit 8 passes the notification indicating the reception of a SMS message from "John "to the output unit 14. The output unit 14 may display a text, plays back a ring tone, generate a vibration or other (see Figure 4).

An advantage of the proposed solution over existing solutions is that the activation of the notifications OFF mode is implemented in software rather than in hardware. Accordingly, it can be implemented by any electronic device and does not require the electronic device to be placed in any support. Moreover, the proposed solution provides flexibility to the user to tailor which notifications from which applications, and concerning specific other users, may be output immediately even if the navigation application is running or which for example may be only output once the navigation application has been shut down or at least moved to run in the background.

It will be understood that the processing unit referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory unit. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features.

## Claims

1. A method of operating an electronic device (2), the method comprising:
receiving (200) a user input to adjust the settings of a navigation application (12) on the electronic device (2) so that a notifications OFF mode is activated on the electronic device (2), wherein the notifications OFF mode prevents outputting a notification indicative of at least a first event by the electronic device (2) when the navigation application (12) is running, wherein the first event comprises the reception of a phone call or the reception of a message from another electronic device;
storing (200) the adjusted settings of the navigation application (12) on the electronic device (2);
receiving (204) a user input to start running the navigation application (12);
detecting (206) the at least one first event; and
generating (212) an automatic response to the other electronic device indicating an unavailability of the user of the electronic device (2).

2. A method according to claim 1, comprising:
receiving (200) a user input to customize the first event in the settings of the navigation application.

3. A method according to any of claims 1 to 2, wherein the notifications OFF mode permits outputting a notification indicative of a second event when the navigation application is running.

4. A method according to claim 3, wherein the second event is the reception of a phone call or the reception of a message from a predetermined electronic device.

5. A method according to claim 3 or claim 4, comprising:
receiving (200) a user input to customize the second event in the settings of the navigation application.

6. A method according to claims 1 to 5, comprising:
generating a notification indicative of the first event; and
storing the notification.

7. A method according to claim 6, comprising:
receiving (216) a user input to stop running the navigation application; and
outputting (218) the stored notification.

8. A method according to any of claims 1 to 7, wherein the adjusted settings of the navigation application take priority over settings of another application permitting outputting a notification indicative of the at least first event.

9. An electronic device (2) comprising:
a processor (8) configured to:
adjust the settings of a navigation application in response to receiving a user input so that a notifications OFF mode is activated, wherein the notifications OFF mode prevents outputting of a notification indicative of a first event when the navigation application is running, wherein the first event comprises the reception of a phone call or the reception of a message from another electronic device; and
store the adjusted settings of the navigation application;
receive (204) a user input to start running the navigation application (12);
detect (206) the at least one first event; and
generate (212) an automatic response to the other electronic device indicating an unavailability of the user of the electronic device (2).

10. An electronic device (2) according to claim 9, wherein the electronic device (2) is a mobile phone, a tablet computer, or a smart watch.

11. A computer program for an electronic device, comprising software code for performing the method of any of claims 1 to 8 when said computer program is run on a electronic device (2).

## Patentansprüche

1. Verfahren zum Betreiben eines elektronischen Geräts (2), wobei das Verfahren aufweist:
Empfangen (200) einer Benutzereingabe, um die Einstellungen einer Navigationsanwendung (12) auf dem elektronischen Gerät (2) zu justieren, sodass auf dem elektronischen Gerät (2) ein Benachrichtigungen-AUS-Modus aktiviert wird, wobei der Benachrichtigungen-AUS-Modus ein Ausgeben einer auf wenigstens ein erstes Ereignis hinweisenden Benachrichtigung durch das elektronische Gerät (2) verhindert, wenn die Navigationsanwendung (12) läuft, wobei das erste Ereignis den Empfang eines Telefonanrufs oder den Empfang einer Mitteilung von einem anderen elektronischen Gerät aufweist;
Speichern (200) der justierten Einstellungen der Navigationsanwendung (12) auf dem elektronischen Gerät (2);
Empfangen (204) einer Benutzereingabe, um die Ausführung der Navigationsanwendung (12) zu starten;
Feststellen (206) des wenigstens einen ersten Ereignisses; und
Erzeugen (212) einer automatischen Antwort an das andere elektronische Gerät, die eine Nichtverfügbarkeit des Benutzers des elektronischen Geräts (2) anzeigt.

2. Verfahren nach Anspruch 1, aufweisend:
Empfangen (200) einer Benutzereingabe, um das erste Ereignis in den Einstellungen der Navigationsanwendung zu individualisieren.

3. Verfahren nach einem der Ansprüche 1 bis 2, bei welchem der Benachrichtigungen-AUS-Modus ein Ausgeben einer auf ein zweites Ereignis hinweisenden Benachrichtigung zulässt, wenn die Navigationsanwendung läuft.

4. Verfahren nach Anspruch 3, bei welchem das zweite Ereignis der Empfang eines Telefonanrufs oder der Empfang einer Mitteilung von einem vorbestimmten elektronischen Gerät ist.

5. Verfahren nach Anspruch 3 oder Anspruch 4, aufweisend: Empfangen (200) einer Benutzereingabe, um das zweite Ereignis in den Einstellungen der Navigationsanwendung zu individualisieren.

6. Verfahren nach einem der Ansprüche 1 bis 5, aufweisend:
Erzeugen einer auf das erste Ereignis hinweisenden Benachrichtigung; und
Speichern der Benachrichtigung.

7. Verfahren nach Anspruch 6, aufweisend:
Empfangen (216) einer Benutzereingabe, um die Ausführung der Navigationsanwendung zu stoppen; und
Ausgeben (218) der gespeicherten Benachrichtigung.

8. Verfahren nach einem der Ansprüche 1 bis 7, bei welchem die justierten Einstellungen der Navigationsanwendung Vorrang vor Einstellungen einer anderen Anwendung haben, die ein Ausgeben einer auf das wenigstens erste Ereignis hinweisenden Benachrichtigung zulässt.

9. Elektronisches Gerät (2), aufweisend:
einen Prozessor (8), der konfiguriert ist, um:
die Einstellungen einer Navigationsanwendung als Reaktion auf ein Empfangen einer Benutzereingabe zu justieren, sodass ein Benachrichtigungen-AUS-Modus aktiviert wird, wobei der Benachrichtigungen-AUS-Modus ein Ausgeben einer auf ein erstes Ereignis hinweisenden Benachrichtigung verhindert, wenn die Navigationsanwendung läuft, wobei das erste Ereignis den Empfang eines Telefonanrufs oder den Empfang einer Mitteilung von einem anderen elektronischen Gerät aufweist; und
die justierten Einstellungen der Navigationsanwendung zu speichern;
eine Benutzereingabe, um die Ausführung der Navigationsanwendung (12) zu starten, zu empfangen (204);
das wenigstens eine erste Ereignis festzustellen (206); und
eine automatische Antwort an das andere elektronische Gerät zu erzeugen (212), die eine Nichtverfügbarkeit des Benutzers des elektronischen Geräts (2) anzeigt.

10. Elektronisches Gerät nach Anspruch 9, wobei das elektronische Gerät (2) ein Mobiltelefon, ein Tablet-Computer oder eine Smartwatch ist.

11. Computerprogramm für ein elektronisches Gerät, aufweisend einen Softwarecode zum Durchführen des Verfahrens nach einem der Ansprüche 1 bis 8, wenn das Computerprogramm auf einem elektronischen Gerät (2) ausgeführt wird.

## Revendications

1. Procédé de fonctionnement d'un dispositif électronique (2), le procédé comportant les étapes consistant à :
recevoir (200) une entrée d'utilisateur pour ajuster les réglages d'une application de navigation (12) sur le dispositif électronique (2) de telle sorte qu'un mode de Notifications désactivées est activé sur le dispositif électronique (2), dans lequel le mode de Notifications désactivées empêche d'émettre en sortie une notification indiquant au moins un premier événement par le dispositif électronique (2) quand l'application de navigation (12) est en cours d'exécution, dans lequel le premier événement comporte la réception d'un appel téléphonique ou la réception d'un message en provenance d'un autre dispositif électronique ;
stocker (200) les réglages ajustés de l'application de navigation (12) sur le dispositif électronique (2) ;
recevoir (204) une entrée d'utilisateur pour commencer l'exécution de l'application de navigation (12) ;
détecter (206) ledit au moins un premier événement ; et
générer (212) une réponse automatique à l'autre dispositif électronique indiquant une indisponibilité de l'utilisateur du dispositif électronique (2).

2. Procédé selon la revendication 1, comportant l'étape consistant à :
recevoir (200) une entrée d'utilisateur pour personnaliser le premier événement dans les réglages de l'application de navigation.

3. Procédé selon l'une quelconque des revendications 1 à 2, dans lequel le mode de Notifications désactivées permet d'émettre en sortie une notification indiquant un deuxième événement quand l'application de navigation est en cours d'exécution.

4. Procédé selon la revendication 3, dans lequel le deuxième événement est la réception d'un appel téléphonique ou la réception d'un message en provenance d'un dispositif électronique prédéterminé.

5. Procédé selon la revendication 3 ou la revendication 4, comportant l'étape consistant à :
recevoir (200) une entrée d'utilisateur pour personnaliser le deuxième événement dans les réglages de l'application de navigation.

6. Procédé selon l'une quelconque des revendications 1 à 5, comportant les étapes consistant à :
générer une notification indiquant le premier événement ; et
stocker la notification.

7. Procédé selon la revendication 6, comportant les étapes consistant à :
recevoir (216) une entrée d'utilisateur pour arrêter l'exécution de l'application de navigation ; et
émettre en sortie (218) la notification stockée.

8. Procédé selon l'une quelconque des revendications 1 à 7, dans lequel les réglages ajustés de l'application de navigation sont prioritaires sur des réglages d'une autre application permettant d'émettre en sortie une notification indiquant ledit au moins un premier événement.

9. Dispositif électronique (2) comportant :
un processeur (8) configuré pour :
ajuster les réglages d'une application de navigation en réponse à la réception d'une entrée d'utilisateur de telle sorte qu'un mode de Notifications désactivées est activé, dans lequel le mode de Notifications désactivées empêche d'émettre en sortie une notification indiquant un premier événement quand l'application de navigation est en cours d'exécution, dans lequel le premier événement comporte la réception d'un appel téléphonique ou la réception d'un message en provenance d'un autre dispositif électronique ; et
stocker les réglages ajustés de l'application de navigation ;
recevoir (204) une entrée d'utilisateur pour commencer l'exécution de l'application de navigation (12) ;
détecter (206) ledit au moins un premier événement ; et
générer (212) une réponse automatique à l'autre dispositif électronique indiquant une indisponibilité de l'utilisateur du dispositif électronique (2).

10. Dispositif électronique (2) selon la revendication 9, dans lequel le dispositif électronique (2) est un téléphone mobile, une tablette électronique, ou une montre intelligente.

11. Programme informatique pour un dispositif électronique, comportant un code de logiciel servant à effectuer le procédé selon l'une quelconque des revendications 1 à 8, quand ledit programme informatique est exécuté sur un dispositif électronique (2).
